Europäisches Patentamt

European Patent Office

Office européen des brevets

(11) Publication number: **0 377 323**
**A2**

# EUROPEAN PATENT APPLICATION

(21) Application number: 89313612.7

(22) Date of filing: 27.12.89

(51) Int. Cl.5: **C08J 9/12, //(C08L23/02,23:08, 25:08)**

(30) Priority: 30.12.88 US 292036

(43) Date of publication of application:
**11.07.90 Bulletin 90/28**

(84) Designated Contracting States:
**AT BE CH DE ES FR GB GR IT LI LU NL SE**

(71) Applicant: **THE DOW CHEMICAL COMPANY**
**2030 Dow Center Abbott Road**
**Midland, MI 48640(US)**

(72) Inventor: **Chum, Steve Pak-Wing**
**126 Juniper Street**
**Lake Jackson Texas 77566(US)**
Inventor: **Rubens, Louis C.**
**503 Linwood Drive**
**Midland Michigan 48640(US)**

(74) Representative: **Burford, Anthony Frederick et al**
**W.H. Beck, Greener & Co. 7 Stone Buildings**
**Lincoln's Inn**
**London WC2A 3SZ(GB)**

(54) Closed cell microcellular foams and their method of manufacture.

(57) Closed cell microcellular foam having cells with diameters of less than 10 $\mu$m and preferably having a density is less than 0.1 gm/cm$^3$ are prepared from copolymers of $\alpha$-olefin and $\alpha,\beta$-monoethylenically unsaturated carboxylic acid. The copolymer is permeated with a blowing agent and ammonia at a pressure of 1.4 to 20 MPag in the presence of an inert gas and subsequently is heated by electromagnetic radiation of 0.1 to 200 MHz.

EP 0 377 323 A2

# CLOSED CELL MICROCELLULAR FOAMS AND THEIR METHOD OF MANUFACTURE

The invention relates generally to the field of closed cell microcellular foams and specifically to closed cell microcellular foam sheet. The invention also relates to a method for preparing microcellular foams having closed cells with diameters of less than 10 micrometers ($\mu$m).

A polymeric foam is commonly classified as microcellular if it has cells having diameters on the order of 30 $\mu$m or less. However, for the purposes of this application, a microcellular foam has closed cells with diameters on the order of 10 $\mu$m or less.

A major application of microcellular foam technology is in packaging of foods, chemicals and consumer products. Microcellular foams exhibit higher impact resistance at smaller cross-sectional areas when compared with larger celled foam.

Medical uses for microcellular foam have been identified. These uses include artificial skin and blood vessels. Small cell size and resultant high surface area per millimeter (mm) of thickness also make microcellular foam compositions of potential interest as filters, ion exchange supports, low dielectric insulation materials, filter chromatography substrates and catalytic substrates.

Early processes for producing microcellular foam were developed at the Massachusetts Institute of Technology in the 1980's. Batch and extrusion processes for preparation of closed cell microcellular foam having cells with a diameter of less than 10 microns ($\mu$m) are disclosed in Martini-Vvedensky, et al., U.S. Patent No. 4,473,665. Supersaturation of the plastic with gases permits one to control the number of cell nucleation centers.

Rubens, U.S. Patent No. 3,711,430 discloses closed cell microcellular foam and a method of preparation which utilizes radio frequency (RF) radiation to foam a copolymer permeated with a combination of a perchlorofluorocarbon and ammonia. The foam has a cell size which is reduced by a factor of 10-100.

Using the method of Rubens, the present inventors are not able to prepare a foam with cell size of less than from about 30 to about 100 $\mu$m in diameter.

Pollard, et al., U.S. Patent No. 3,013,996 discloses a method of subjecting expandable styrene polymer particles containing a volatile organic fluid to heat in a pressurized nitrogen gas ($N_2$) and/or air environment. The pressure is from 200 to 2000 pounds per square inch gauge (1.4 - 14 Mpag) and the temperatures range is between 50° C and 85° C for a time of from 0.5 to 72 hours sufficient to allow the gas to diffuse substantially throughout the polymer particles. The pressure is then released to atmospheric pressure in order to foam the particles which are then quickly treated with hot water for a time of not more than 30 seconds and subsequently treated with cold water.

Other existing methods for preparing microcellular foams include techniques such as classical phase inversion, sintering, and nuclear bombardment. In general, these processes produce foams with density greater than 0.1 gram per cubic centimeter ($g/cm^3$) (6.4 pounds per cubic foot ($lb/ft^3$)).

It would be desirable to be able to prepare a microcellular foam having cells with a diameter of less than 10 $\mu$m.

It would also be desirable to be able to prepare a microcellular foam having cells with a diameter of less than 10 $\mu$m and also having a density of less than 0.1 $g/cm^3$ (6.4 $lb/ft^3$)

A first aspect of the invention is a method for preparing a closed cell microcellular foam comprising the steps of: (a) permeating a copolymer of at least one $\alpha$-olefin and at least one $\alpha,\beta$-monoethylenically unsaturated carboxylic acid, by pressurizing using an inert gas in the presence of a blowing agent and ammonia for an incubation time sufficient to effect a substantial diffusion of the inert gas, the blowing agent and the ammonia throughout the copolymer, the pressurizing being sufficient to maintain a pressure from about 1.4 Mpag (200 psig) to about 20 Mpag (3,000 psig); and thereafter (b) heating the permeated copolymer in a field of electromagnetic radiation of from about 0.1 megahertz (MHz) to about 200 MHz to prepare a closed cell microcellular foam wherein the foam contains cells with a diameter of less than 10 $\mu$m.

A second aspect of the invention is a closed cell microcellular foam comprising a copolymer of at least one $\alpha$-olefin and at least one $\alpha,\beta$-monoethylenically unsaturated carboxylic acid wherein the foam has cells having diameters of less than 10 $\mu$m.

In a typical method for preparing the microcellular foam of the present invention, an olefinic copolymer having carboxylic acid moieties is placed in an enclosed space and cooled to a temperature of from about -175° C (degrees centigrade) to about 0° C, preferably from about -80° C to about 0° C. Ammonia and at least one blowing agent are introduced as liquids into the enclosed space in an amount needed to submerge the copolymer and react with at least 85 percent of the carboxylic acid moieties of the copolymer. The enclosed space is then pressurized using an inert gas to a pressure of from about 200 pounds per square inch gauge (psig) (1.4 Mpag) to about 1000 psig (7 Mpag), preferably from about 200 psig (1.4 Mpag) to about 800 psig (5.5 Mpag). The enclosed space is heated slowly to a temperature of greater than 60°C but no greater than 1° below the melt temperature of the copolymer, preferably around 72°C. The copolymer is maintained at that temperature and pressure in an inert gas environment for an incubation time that is equivalent to at least 1/2 hour (h). Preferably the incubation time ranges from about 1/2 h per mm of thickness of the copolymer to about 12 h per mm thickness. More preferably, the incubation time ranges from about 1/2 h to about 4 h per mm of thickness of the copolymer.

The pressure rises autogeneously above the prepressurized pressure as the temperature rises in the enclosed space. Preferably the final pressure range is from about 300 psig (2 MPag) to about 3000 psig (20 Mpag), more preferably from about 300 psig (2 Pag) to about 800 psig (5.5 MPag).

The permeated copolymer is cooled, usually to a temperature of about -100°C to about 10°C and removed from the enclosed space. The permeated copolymer is then heated in a dielectric heating means such as a 5,000 to 10,000 watt radiowave frequency (RF) oven to prepare a microcellular foam. The RF oven emits electromagnetic wave radiation at a frequency from about 10 MHz to about 100 MHz, preferably from about 6 MHz to about 100 MHz. The frequency may reach 200 MHz.

Blowing agents which can be used in the present invention method include but are not limited to halogenated $C_1$-$C_6$, preferably $C_1$-$C_4$, alkyls; $C_1$-$C_6$, preferably $C_1$-$C_4$, alkyls; chlorofluorohydrocarbons; chlorofluorocarbons; fluorocarbons; fluorohydrocarbons; and carbon dioxide ($CO_2$). Preferably, a blowing agent is selected from the group consisting of chlorofluorocarbons and chlorofluorohydrocarbons, such as 1-chloro-1,1-difluoroethane. More preferably the blowing agent is 1,1,2,2-tetrafluro-1,2-dichloroethane (CFC 114).

The inert gas usually is selected from the group consisting of nitrogen, helium, neon, argon, krypton, xenon, radon and mixtures thereof. Typically the gas phase in the enclosed space is substantially the inert gas, preferably nitrogen, however the gas phase also contains trace amounts of chlorofluorocarbon, ammonia, oxygen, water vapor, carbon dioxide and the like. The vaporized chlorofluorocarbon and ammonia are in equilibrium with a liquid phase of these compounds which completely cover the copolymer. Trace amounts of air can enter the system and contribute oxygen and carbon dioxide elements to the enclosed space.

Olefin/carboxylic acid copolymers contemplated for use in the present invention method include both random copolymers and graft copolymers. These copolymers can be obtained commercially or they can be prepared by a variety of suitable techniques well known in the polymerization art. While the invention is not to be limited to or bound by any particular technique for preparing the copolymers, suitable methods for preparing graft copolymers which can be used in the practice of this invention are disclosed in Nowak, et al., U.S. Patents 3,177,269 and Nowak, U.S. Patent No. 3,270,090, the teachings of which are herein incorporated by reference.

In either the random or the graft copolymers suitable for use in the practice of this invention, it is generally preferred that the copolymer contain between about 70 and about 95 weight percent of combined olefin and between about 5 and about 30 weight percent of combined carboxylic acid, the weight percent being based on the weight of the copolymer.

Usually $\alpha$-olefins having from about 2 to about 8 carbons per molecule, preferably from about 3 to about 8 carbons, can be employed in preparing the copolymers. Exemplary olefins within this class include ethylene, propylene, 1-butene, 1-pentene, 2-pentene, 1-hexene, 3-hexene, 3-methyl-1-butene, 4-methyl-1-pentene, 4-methyl-1-hexene, styrene, and the like. Copolymers employing ethylene or propylene as the olefin are generally preferred.

Any $\alpha,\beta$-monoethylenically unsaturated carboxylic acid having from about 2 to about 8 carbons per molecule, preferably from about 3 to about 8 carbons, which is copolymerizable with an olefin of the class described above or which is suitable for grafting onto a homopolymer of an olefin of the class described above, can be used to prepare a copolymer for use in the present invention. Exemplary acids within this class include monocarboxylic acids and polycarboxylic acids selected from the group consisting of acrylic acid, methacrylic acid, ethacrylic acid, crotonic acid, isocrotonic acid, tiglic acid, angelic acid, senecioic acid, fumaric acid, maleic acid, itaconic acid, citraconic acid and combinations thereof. Among these, acrylic acid is preferred. The preferred copolymer is poly-(ethylene/acrylic acid).

The term used to describe the acid portion of the copolymer of this invention is intended to include suitable $\alpha,\beta$-monoethylenically unsaturated anhydrides of carboxylic acids such as maleic anhydride. Although maleic anhydride is not a carboxylic acid because it does not have a hydrogen attached to the carboxylic groups, it is considered to be an acid for the purpose of this invention because its chemical reactivity is that of an acid.

The copolymer need not necessarily comprise a two-component copolymer. Thus, although the olefin content of the copolymer desirably should be at least 70 weight percent by weight of the copolymer, more than one olefin can be employed. Additionally any third copolymerizable monomer can be employed in combination with the olefin and the carboxylic acid comonomers. The ionic hydrocarbon copolymers described in Rees, U.S. Patent 3,264,272 may also be used in the present invention.

A foam of the present invention usually has a density of from about 0.01 g/cm$^3$ (0.64 lb/ft$^3$) to about 0.5 g/cm$^3$ (32 lb/ft$^3$), preferably from about 0.01 g/cm$^3$ (0.64 lb/ft$^3$) to about 0.1 g/cm$^3$ (6.4 lb/ft$^3$). The cell diameter can range from about 1 $\mu$m to about 10 $\mu$m, preferably from about 2 $\mu$m to about 9 $\mu$m, especially from about 2 to about 5.

The carboxylic acid portion of the copolymer may be complexed with a metal cation. If a metal ion is complexed with the carboxylic acid moieties of the copolymer to form a metal salt of the copolymer, the resulting copolymer is referred to as an ionomer. The metal ion comprises the cationic form of a metal selected from the group consisting of alkali metal, especially alkaline earth metal, transition metal and combinations thereof. Preferably, the metal ion is the cation form of a metal selected from the group consisting of lead, gold, bismuth, copper, silver, sodium, magnesium, silicon, strontium, platinum and combinations thereof. More preferably, the metal cation is selected from the group consisting of magnesium and lead. Usually at least 15 percent of the carboxylic acid is complexed with cation in said ionomers.

The ionomer can be crosslinked before the permeation step in the enclosed space. Crosslinking is usually required when the ionomer is formed from a metal salt where the metal is selected from lead, bismuth, silver, copper and combinations thereof. One method of crosslinking is to expose this copolymer to electron bombardment such as with a beam of about one to about four million electron volts (Mev) for a time sufficient to deliver a dosage of about 5 to about 30 megarads.

In a preferred embodiment an olefin copolymer comprising from about 70 weight percent to about 95 weight percent by weight of the copolymer of an $\alpha$-olefin having from about 2 to about 8 carbons, preferably from about 3 to about 8 carbons, and from about 5 weight percent to about 30 weight percent by weight of the copolymer of an $\alpha,\beta$-monoethylenically unsaturated carboxylic acid having from about 2 to about 8 carbons, preferably about 3 to about 8 carbons, is combined with a metal cation to form an ionomer. The mass is compression molded to form a sheet. The sheet is permeated with a chlorofluorocarbon blowing agent and ammonia in an inert gas environment at high pressure. The sheet is then foamed in a 5000 to about a 10,000 watt RF oven for about one minute at a frequency from about 0.1 MHz to about 1 MHz. Preferably, the microcellular foam sheet has a thickness of less than 1/2 inch (13 mm).

The following examples are illustrative of preferred embodiments of the present invention.

Example I - Preparation of an Ionomeric Microcellular Foam Sheet

A compression molded ionomeric sheet (2 in x 2 in x 0.12 in) (50 mm x 50 mm x 3 mm) is made by reacting a copolymer of ethylene/acrylic acid (20 weight percent acrylic acid based on the weight of the copolymer) and a sufficient amount of magnesium oxide to complex magnesium with about 15 percent of the acrylic acid groups along the copolymeric backbone. The sheet is placed into a 600 cm$^3$ pressure reactor equipped with a mechanical stirrer. The reactor is cooled in dry ice to -78$^\circ$C, and 190 cm$^3$ of liquid blowing agent, such as 1,1,2,2-tetrafluoro-1,2-dichloroethane (CFC 114), and 10 cm$^3$ of liquid ammonia are introduced into the reactor, submerging the ionomeric sheet. The pressure reactor is pressurized with N$_2$ to a pressure of 200 psig (1.4 Mpag).

The reactor is heated using a heating mantle to a temperature of about 75$^\circ$C +/- 1$^\circ$C. Concurrently, the liquid blowing agent/ammonia mixture in the reactor is stirred mechanically at 100 rpm. After 72 hours, the reactor is cooled in dry ice to a temperature of -78$^\circ$C. The liquids are removed and the gas pressure is released. The reactor is opened and the sheet which is impregnated with CFC 114, ammonia and nitrogen gas (N$_2$) is removed and immediately heated in a 5000 watt RF oven at 6 MHz for about 1 minute. The resultant microcellular foam sheet contains cells having a diameter of about 7 $\mu$m and a density of about 0.05 g/cm$^3$ (3.2 lb/ft$^3$).

Example II - Preparation of Ionomeric Microcellular Foam Sheet

The procedure described in Example 1 is followed. A compression molded ionomeric sheet (2 in x 2 in x 0.04 in) (50 mm x 50 mm x 1 mm) is made from the copolymer of ethylene/acrylic acid and magnesium oxide, as in Example I, and placed in a 600 cm$^3$ reactor. The reactor is cooled to a temperature of -78$^\circ$C and 190 cm$^3$ of liquid CFC 114 and 10 cm$^3$ of liquid ammonia are introduced into the reactor, submerging the sheet. The reactor is pressurized with N$_2$ to a pressure of about 400 psig (2.8 Mpag). The reactor is heated to 75$^\circ$C and the sheet is incubated in N$_2$, ammonia and CFC 114 for 25 hours. The reactor is cooled and the liquids and gases are removed. The sheet which is impregnated with CFC 114, ammonia and $N_2$ is removed and immediately heated in a 5000 watt RF oven at 6 MHz for about 1 minute. The resulting microcellular foam sheet has a density of about 0.05 $g/cm^3$ (3.2 $lb/ft^3$) and an average cell diameter of approximately 5 $\mu$m.

Example III - Preparation of Ionomeric Microcellular Foam Sheet

The procedure described in Example I is followed. A compression molded ionomeric sheet (2 in x 2 in x 0.05 in) (50 mm x 50 mm x 1.25 mm) consisting of a copolymer of ethylene/acrylic acid and lead (20 weight percent of acrylic acid based on the total weight of the copolymer and 15 weight percent of lead based on the weight of acrylic acid) is crosslinked by exposure to a 2 Mev electron beam for a time sufficient to deliver a dosage of 15 megarads. The sheet is placed in a reactor and cooled to about -78°C and 190 ml of liquid CFC 114 and 10 ml of liquid ammonia are introduced into the reactor, submerging the sheet. The reactor is pressurized to about 200 psig (1.4 MPag) with $N_2$. The temperature is raised to 75°C and the sheet is exposed to the resulting $N_2$, CFC 114, and ammonia environment for 48 hours. The reactor is cooled to -78°C and the liquids and gases are removed. The sheet, impregnated with $N_2$, ammonia and CFC 114, is removed to a 10,000 watt RF oven and heated at 10 MHz for about one minute. The resulting microcellular foam sheet has a density of about 0.05 $g/cm^3$ (3.2 $lb/ft^3$) and has cells with an average diameter of about 8$\mu$m.

Cell diameters are measured from scanning electron micrographs taken at random cross-section intervals in the microcellular foam sheets. Foam density is measured using standard ASTM testing method, D-1622-83.

**Claims**

1. A method for preparing a closed cell microcellular foam comprising the steps of:

(a) permeating a copolymer of at least one $\alpha$-olefin and at least one $\alpha,\beta$-monoethylenically unsaturated carboxylic acid, by pressurizing using an inert gas in the presence of a blowing agent and ammonia for an incubation time sufficient to effect a substantial diffusion of the inert gas, the blowing agent and the ammonia throughout the copolymer, the pressurizing being sufficient to maintain a pressure from 1.4 MPag (200 psig) to 20 MPag (3,000 psig); and thereafter

(b) heating the permeated copolymer in a field of electromagnetic radiation of from 0.1 megahertz (MHz) to 200 MHz to prepare a closed cell microcellular foam wherein the foam contains cells with a diameter of less than 10 $\mu$m..

2. A method as claimed in Claim 1, wherein the blowing agent is selected from chlorofluorocarbons and chlorofluorohydrocarbons.

3. A method as claimed in Claim 1 or Claim 2, wherein the pressure of step (a) is from 1.4 MPag (200 psig) to 5.5 MPag (800 psig).

4. A method as claimed in any one of the preceding claims, wherein the inert gas is nitrogen.

5. A method as claimed in any one of the preceding claims, wherein the field of electromagnetic radiation of step (b) is radiowave radiation with a frequency from 6 MHz to 100 MHz.

6. A method as claimed in any one of the preceding claims, wherein the copolymer comprises from 70 weight percent to 95 weight percent of an $\alpha$-olefin and from 5 weight percent to 30 weight percent of an $\alpha,\beta$-monoethylenically unsaturated carboxylic acid, based upon the weight of the copolymer.

7. A method as claimed in any one of the preceding claims, wherein the $\alpha$-olefin contains 3 to 8 carbons and the $\alpha,\beta$-monoethylenically unsaturated carboxylic acid contains 3 to 8 carbons.

8. A method as claimed in Claim 7, wherein the copolymer is poly(ethylene/acrylic acid).

9. A method as claimed in any one of the preceding claims, wherein the carboxylic acid is an ionomer.

10. A method as claimed in Claim 9, wherein the carboxylic acid is complexed with the cation of magnesium or lead.

11. A method as claimed in Claim 9 or Claim 10, further comprising the step of crosslinking of the copolymer of step (a).

12. A closed cell microcellular foam comprising a copolymer of at least one $\alpha$-olefin and at least one $\alpha,\beta$-monoethylenically unsaturated carboxylic acid wherein the foam has cells having diameters of less than 10 $\mu$m.

13. A closed cell microcellular foam as claimed in Claim 12, wherein the copolymer is as defined in any one of Claims 6 to 11.

14. A closed cell microcellular foam as claimed in Claim 12 or Claim 13, wherein the cells have a diameter of 2 $\mu$m to 5 $\mu$m.

15. A closed cell microcellular foam as claimed in any one of Claims 12 to 14, wherein the density is from 0.01 $g/cm^3$ (0.64 $lb/ft^3$) to 0.1 $g/cm^3$ (6.4 $lb/ft^3$).